# EUROPÄISCHE PATENTSCHRIFT

(11) **EP 1 094 270 B1**
(45) Veröffentlichungstag und Bekanntmachung des Hinweises auf die Patenterteilung: **21.12.2005**
(21) Anmeldenummer: 00121357.8
(22) Anmeldetag: 11.10.2000
(51) Int. Cl.: F21S 8/10

(54) **Heckleuchte mit Farbscheibe**
Rear lamp having a coloured lens
Feu arrière avec écran coloré

(30) Priorität: 21.10.1999 DE 19950700
(43) Veröffentlichungstag der Anmeldung: 25.04.2001
(73) Patentinhaber: Volkswagen Aktiengesellschaft, 38436 Wolfsburg (DE)
(72) Erfinder: Werner, Michael, 38106 Braunschweig (DE)
(74) Vertreter: Reitstötter - Kinzebach

(56) Entgegenhaltungen:
- FR-A- 2 626 348
- US-A- 4 835 666
- US-A- 5 562 338
- US-A- 5 603 561

## Beschreibung

Die Erfindung betrifft eine Leuchte mit mindestens einer Lichtquelle in einem Gehäuse mit mindestens einem Reflektor und einer ersten Lichtscheibe.

Eine solche Leuchte ist aus EP 0 603 810 bekannt. Die Beleuchtungsvorrichtung nach diesem Stand der Technik umfaßt ein Gehäuse, das so gestaltet ist, daß es eine Ausbildung aufweist, die mit derjenigen des Eckteils eines Fahrzeugkörpers übereinstimmt, wobei eine linke innere Wandoberfläche des besagten Gehäuses so bemessen ist, daß sie eine Länge aufweist, die sich von derjenigen einer rechten inneren Wandoberflächen desselben unterscheidet, eine aus einem transparenten farbigen Material geformte und mit einer Ausrichtung unter einem im wesentlichen rechten Winkel bezüglich der Fahrzeugrichtung des besagten Fahrzeugs in einen Öffnungsteil des besagten Gehäuses eingepaßte innere Streuscheibe und eine aus einem transparenten farbigen Material geformte und in Anpassung an das Profil eines Fahrzeugkörpers angeordnete äußere Streuscheibe. Dabei umfaßt die innere Streuscheibe einen Verlängerungsteil, der sich entlang von einer der linken und rechten Wandoberflächen erstreckt, während er in engen Kontakt mit der Wandoberfläche kommt. Außerdem erreicht das vorderste Ende des Verlängerungsteils eine Rückseite der äußeren Streuscheibe.

Ein Anwendungsverfahren von signalfarbenorientierter Lichtstrahlung und eine dazugehörige Vorrichtung ist aus EP 0 718 546 bekannt. Zur Verwendung im Verkehrswesen wird bei diesem Stand der Technik die Farborientierung gezielt beeinflußt. Für eine Vorrichtung aus einer Lampe mit Reflektor und/oder Vorschaltprisma kommen dichroitische Beschichtungen auf den Reflektoren und/oder den Vorschaltprismen oder anderer Elemente in Frage.

Ein Nachteil bei den Leuchten nach dem Stand der Technik ist es, daß der Farbeindruck der Leuchten von den Lichtquellen in der Leuchte bestimmt wird und vom Blickwinkel des Betrachters abhängt: es treten Winkeleffekte bei dem Farbeindruck der Leuchte auf. Außerdem tragen Fugen und Kanten zwischen einzelnen Komponenten in der Leuchte zu einem inhomogenen Farbeindruck bei.

Aus der US 5,603,561 ist eine Fahrzeugleuchte mit einer Lichtquelle, einem Reflektor, einer äußeren Linse und einer inneren Linse bekannt. Die innere Linse ist zwischen der äußeren Linse und der Lichtquelle angeordnet und sie weist eine Färbung auf.

Aus der US 5,562,338 ist auch eine Fahrzeugleuchte mit einer Lichtquelle, einem Reflektor, einer äußeren und einer gefärbten inneren Linse bekannt. Die innere Linse ist am Randbereich mit dem Leuchtengehäuse verbunden.

Aufgabe der vorliegenden Erfindung ist es, eine Leuchte zu schaffen, die unter nahezu jedem Blickwinkel betrachtet einen gewünschten Farbeindruck vermittelt, der so homogen wie möglich ist, wobei die Leuchte kostengünstig herzustellen sein soll.

Diese Aufgabe wird gelöst durch eine Heckleuchte mit den Merkmalen nach Anspruch 1. Bevorzugte Ausführungsformen der Erfindung sind Gegenstand der Unteransprüche.

Der Erfindung liegt als Grundgedanke zugrunde, eine Zwischenscheibe bzw. zweite Lichtscheibe auf den Rahmen des Gehäuses zu positionieren, wobei die zweite Lichtscheibe, der Rahmen und die äußere Abdeckscheibe in ihrem jeweiligen Randbereich miteinander verbunden werden. Durch die Verwendung von zwei hintereinander angeordneten Lichtscheiben läßt es sich erreichen, daß die Färbung der Leuchte z.B. eine tief rote Färbung verliehen werden kann. Der gewünschte Gesamteindruck in Bezug auf die Farbe (z.B. tief rot) wird dadurch erreicht, daß die zweite Lichtscheibe ebenfalls eingefärbt wird, z.B. in derselben Farbe wie die erste Lichtscheibe oder in einer leicht davon abweichenden Farbe. Ein Tiefeneindruck wird ferner dadurch erreicht, daß die zweite Lichtscheibe in einem relativ großen Abstand von der ersten Lichtscheibe angeordnet wird. Insbesondere kann dabei die zweite Lichtscheibe wenigstens abschnittsweise direkt auf dem Reflektor bzw. auf dem Gehäuse aufliegen. Die erfindungsgemäße Leuchte mit mindestens einer Lichtquelle in einem Gehäuse mit mindestens einem Reflektor und einer ersten Lichtscheibe umfaßt demnach eine zweite Lichtscheibe, die wenigstens abschnittsweise unmittelbar auf dem Gehäuse angeordnet ist und eine Färbung aufweist. Die zweite Lichtscheibe weist einen Farbfilter auf, der in Höhe mindestens eines Reflektors in die zweite Lichtscheibe eingesetzt ist.

Die zweite Lichtscheibe weist vorzugsweise eine optische Struktur in Höhe mindestens eines Reflektors auf.

Weitere Merkmale und Vorteile der Erfindung ergeben sich aus der folgenden Beschreibung von Ausführungsbeispielen, auf die die Erfindung jedoch nicht beschränkt ist.
- Fig. 1: zeigt eine erste Ausführungsform der Erfindung im Querschnitt.
- Fig. 2: zeigt eine Explosionsansicht einer weiteren Ausführungsform mit den Einzelteilen der Leuchte.

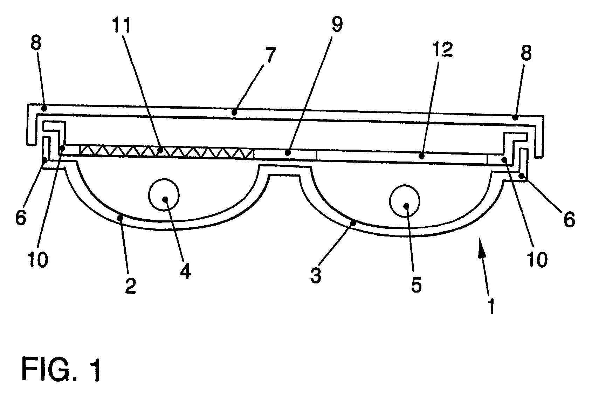

In Fig. 1 ist eine Leuchte mit zwei Lichtquellen 4 und 5 in einem Gehäuse 1 dargestellt. Das Gehäuse 1 umfaßt für jede der beiden Lichtquellen 4 und 5 einen Reflektor 2 bzw. 3. Die Leuchte wird durch eine erste Lichtscheibe 7 nach vorne abgeschlossen. Die Lichtscheibe dient dabei zum Schutz der Innenkomponenten der Leuchte vor mechanischer Einwirkung von außen.

Eine soweit dem Stand der Technik entsprechende Leuchte hat den Nachteil, daß kein harmonischer, insbesondere harmonisch roter Farbeindruck in ausgeschaltetem Zustand der Leuchte hervorgerufen wird bzw. dieser durch die Farbe der Lichtquelle bestimmt wird. In Bezug auf das Design ist es bisweilen jedoch durchaus erwünscht, der Leuchte eine "Grundfärbung" zu erteilen. Diese Grundfärbung ist auch dann sichtbar, wenn die Lichtquellen der Leuchte nicht eingeschaltet sind. Diese Grundfärbung der Leuchte sollte sowohl in eingeschaltetem als auch in ausgeschaltetem Zustand der Leuchte möglichst homogen sein: unter nahezu jedem Blickwinkel betrachtet sollte ein homogener Farbeindruck der Leuchte vermittelt werden, durch den die Leuchte hochwertig und brillant erscheint und ein gewisser "Tiefeneindruck" entsteht.

Erfindungsgemäß umfaßt die Leuchte daher eine zweite Lichtscheibe 9, die wenigstens abschnittsweise unmittelbar auf dem Gehäuse 1 angeordnet ist und eine gewünschte Färbung aufweist. Dadurch daß die zweite Lichtscheibe 9 wenigstens abschnittsweise direkt über dem Gehäuse 1 angeordnet ist, hält sie in diesen Abschnitten automatisch einen größtmöglichen Abstand von der ebenfalls gefärbten ersten Lichtscheibe 7 ein. Damit wird ein "Tiefeneindruck" beim Betrachten der Leuchte hervorgerufen.

Durch die hintereinander angeordneten Lichtscheiben 7 und 9 entsteht somit der Eindruck einer größeren Farbtiefe und Brillanz beim Betrachten der Leuchte sowie einer größeren Homogenität bei unterschiedlichen Funktionen. Damit der gewünschte Gesamtfarbton der Leuchte erreicht wird, können beide Lichtscheiben 7 und 9 eine unterschiedliche Farbtiefe erhalten. So können beide Lichtscheiben z.B. rosa gefärbt sein, so daß sich insgesamt der Eindruck einer roten Färbung der Leuchte ergibt. Insbesondere weist die erste Lichtscheibe 7 eine im wesentlichen gleiche Färbung wie die zweite Lichtscheibe 9 auf. Es ist aber auch möglich, beide Lichtscheiben mit einer unterschiedlichen Farbtiefe zu versehen, also etwa die erste Lichtscheibe 7 hell rosa und die zweite Lichtscheibe 9 tiefer rot.

Von der Färbung der Lichtscheiben 7 und 9 ist die Wahl der Farbe der Lichtquellen 4 und 5 abhängig. Soll beispielsweise die erste Lichtquelle 4 als Rückfahrscheinwerfer dienen, so muß die erste Lichtquelle 4 blau gefärbt sein (bzw. ein entsprechender Farbfilter vor der ersten Lichtquelle 4 angeordnet werden), so daß die Leuchte bei eingeschalteter erster Lichtquelle 4 zusammen mit der rosa gefärbten ersten und zweiten Lichtscheibe 7 und 9 ein weißes Licht ergibt. Soll die zweite Lichtquelle 5 beispielsweise als Blinklicht eingesetzt werden, so muß die zweite Lichtquelle 5 grün gefärbt sein (bzw. ein entsprechender Farbfilter vor der ersten Lichtquelle 5 angeordnet werden), so daß sich mit der rosa Lichtscheibe 7 und 9 als resultierendes Licht orange ergibt, wie es für die Fahrtrichtungsanzeige benötigt wird.

Um die Farbeindrücke zu verstärken, ist das Gehäuse 1 vorzugsweise verchromt. Durch die reflektierende Eigenschaft des verchromten Gehäuses 1 wird die Brillanz der Leuchte erhöht. Licht, das von außen in die Leuchte fällt, wird einerseits von den Lichtscheiben 7 und 9 zurückgeworfen. Andererseits wird Licht, das bis auf das Gehäuse 1 in die Leuchte eintritt, von dem verchromten Gehäuse 1 nicht absorbiert, sondern wieder durch die Lichtscheiben 7 und 9 zurückgeworfen, so daß sich insgesamt ein intensiverer Farbeindruck der Leuchte ergibt.

Die erste Lichtscheibe 7 ist wie in Fig. 1 dargestellt an ihrem Randbereich 8 mit einem Rahmen 6 des Gehäuses verbunden. Dies erfolgt vorzugsweise derart, daß das Gehäuse durch die Verbindung mit der Lichtscheibe 7 hermetisch abgeschlossen wird. Die zweite Lichtscheibe 9 wird über ihren Randbereich 10 mit dem Rahmen 6 des Gehäuses 1 und dem Randbereich 8 der ersten Lichtscheibe 7 verbunden, so daß Gehäuse 1, erste Lichtscheibe 7 und zweite Lichtscheibe 9 eine Einheit bilden.

Die zweite Lichtscheibe 9 in Fig. 1 weist vor der ersten Lichtquelle 4 eine optische Struktur 11 in Höhe des ersten Reflektors 2 auf. Die optische Struktur umfaßt insbesondere Tonnen und Kissen oder "Bienenwaben", die in Fig. 1 durch die eingezeichneten Dreiecke dargestellt sind.

Zusätzlich weist die zweite Lichtscheibe 9 der Ausführungsform nach Fig. 1 vor der zweiten Lichtquelle 5 eine Aussparung in Höhe des zweiten Reflektors 3 auf, so daß die Lichtquelle von außen nur durch die erste Lichtscheibe 7 sichtbar ist.

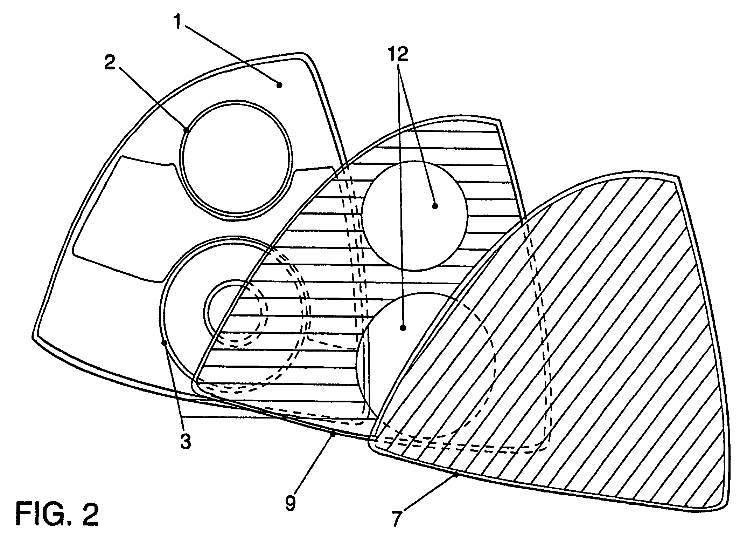

Fig. 2 zeigt eine Explosionsansicht einer weiteren Ausführungsform der Leuchte. Das hintere, teilweise verdeckte Element ist das Gehäuse 1 mit mehreren Reflektoren für eine entsprechende Anzahl an Lichtquellen. Abgeschlossen wird das Gehäuse 1 durch die erste Lichtscheibe 7, die in Fig. 2 vorne dargestellt ist. In der Mitte zwischen dem Gehäuse 1 und der ersten Lichtscheibe 7 ist die zweite Lichtscheibe 9 gezeigt. Die Ausführungsform nach Fig. 2 unterscheidet sich von der Ausführungsform nach Fig. 1 darin, daß sie zwei nach innen versetzte Kammern aufweist, wobei vor einer ein Farbfilter 12 in die zweite Lichtscheibe 9 eingesetzt ist.

### BEZUGSZEICHENLISTE

- 1: Gehäuse
- 2: erster Reflektor
- 3: zweiter Reflektor
- 4: erste Lichtquelle
- 5: zweite Lichtquelle
- 6: Rahmen des Gehäuses
- 7: erste Lichtscheibe
- 8: Randbereich der ersten Lichtscheibe
- 9: zweite Lichtscheibe
- 10: Randbereich der zweiten Lichtscheibe
- 11: strukturierter Abschnitt der zweiten Lichtscheibe, Tonnen, Walzen etc.
- 12: Farbfilter, eingesetzt in der zweiten Lichtscheibe

## Patentansprüche

1. Leuchte mit mindestens einer Lichtquelle (4, 5) in einem Gehäuse (1) mit mindestens einem Reflektor (2, 3) und einer ersten Lichtscheibe (7), wobei eine zweite Lichtscheibe (9), die eine Färbung aufweist, wenigstens abschnittsweise unmittelbar auf dem Gehäuse (1) angeordnet ist,
**dadurch gekennzeichnet, daß**
die zweite Lichtscheibe (9) einen Farbfilter (12) aufweist, der in Höhe mindestens eines Reflektors (2, 3) in die zweite Lichtscheibe (9) eingesetzt ist.

2. Leuchte nach Anspruch 1,
**dadurch gekennzeichnet, daß**
die erste Lichtscheibe (7) eine im wesentlichen gleiche Färbung wie die zweite Lichtscheibe (9) aufweist.

3. Leuchte nach Anspruch 1 oder 2,
**dadurch gekennzeichnet, daß**
das Gehäuse (1) verchromt ist.

4. Leuchte nach einem der vorangehenden Ansprüche,
**dadurch gekennzeichnet, daß**
die zweite Lichtscheibe (9) eine optische Struktur (11) in Höhe mindestens eines Reflektors (2, 3) aufweist.

## Claims

1. Lamp having at least one light source (4, 5) in a housing (1) with at least one reflector (2, 3) and a first lens (7), a second lens (9), which has a colouring, being arranged at least partially directly on the housing (1), **characterized in that** the second lens (9) has a colour filter (12) which is inserted into the second lens (9) at the level of at least one reflector (2, 3).

2. Lamp according to Claim 1, **characterized in that** the first lens (7) has a colouring substantially the same as the second lens (9).

3. Lamp according to Claim 1 or 2, **characterized in that** the housing (1) is chromium plated.

4. Lamp according to one of the preceding claims, **characterized in that** the second lens (9) has an optical structure (11) at the level of at least one reflector (2, 3).

## Revendications

1. Feu comprenant au moins une source lumineuse (4, 5) dans un boîtier (1) comprenant au moins un réflecteur (2, 3) et un premier verre frontal (7), dans lequel un deuxième verre frontal (9), qui présente une coloration, est disposé au moins en partie directement sur le boîtier (1),
**caractérisé en ce que**
le deuxième verre frontal (9) présente un filtre coloré (12) qui est inséré dans le deuxième verre frontal (9) à hauteur d'au moins un réflecteur (2, 3).

2. Feu selon la revendication 1,
**caractérisé en ce que**
le premier verre frontal (7) présente une coloration essentiellement identique au deuxième verre frontal (9).

3. Feu selon la revendication 1 ou 2,
**caractérisé en ce que**
le boîtier (1) est chromé.

4. Feu selon l'une quelconque des revendications précédentes,
**caractérisé en ce que**
le deuxième verre frontal (9) présente une structure optique (11) à la hauteur d'au moins un réflecteur (2, 3).
